# EUROPEAN PATENT APPLICATION

(11) **EP 0 851 266 A2**
(43) Date of publication of application: **01.07.1998**
(21) Application number: 97122896.0
(22) Date of filing: 24.12.1997
(51) Int. Cl.: G02F 1/09

(54) **Optical circulator**

(30) Priority: 26.12.1996 JP 347761/96; 16.12.1997 JP 345992/97
(71) Applicant: NEC CORPORATION, Tokyo (JP); TOKIN CORPORATION, Sendai-shi Miyagi-ken 982 (JP)
(72) Inventor: Kato, Hiroyuki, Minato-ku, Tokyo (JP); Yokoyama, Jun, Minato-ku, Tokyo (JP); Hashima, Manabu, Taihaki-ku, Sendai-shi, Miyagi (JP)
(74) Representative: VOSSIUS & PARTNER

(57) **Abstract**

Disclosed is a polarization-non-dependent type optical circulator which has: a plurality of polarization separating/coupling means (13a,13b,13c) where incident light from outside is separated into two polarized lights with polarization planes orthogonal to each other when the incident light is received by a first end portion and two internally transmitted polarized lights with polarization planes orthogonal to each other are coupled when the two internally transmitted polarized lights are received by a second end portion on the opposite side of the first end portion; a plurality of polarization rotating means (11a,11b,11c,12a,12b,12c), each of which having a first end portion disposed opposite to the second end portion of the polarization separating/coupling means (13a,13b,13c) and a second end portion on the opposite side of the first end portion, where two polarized lights with polarization planes orthogonal to each other are rotated to have polarization planes parallel to each other when the two polarized lights are received by the first portion and two internally transmitted polarized lights with polarization planes parallel to each other are rotated to have polarization planes orthogonal to each other when the two internally transmitted polarized lights are received by the second end portion; and an optical path determining means (14) which is disposed on an optical path connected to the second end portion of the plurality of polarization rotating means (11a,11b,11c,12a,12b,12c) and outputs two polarized lights with polarization planes parallel to each other to be input to the second end portion of one of the plurality of polarization rotating means to the second end portion of another of the plurality of polarization rotating means or to outside according to the direction of the polarization planes and an optical path through which the two polarized lights are input.

## Description

This invention relates to an optical circulator used as a passive optical part to control paths for optical signal in optical communications.

In optical communication systems, non-reciprocal optical parts, such as an optical isolator and an optical circulator are in great demand with an increase in the use of optical fiber amplifiers. Also, it is thought that the wavelength multiplexing communication system to realize large-capacity optical communication can be further easily achieved by replacing a conventional method where an optical signal is amplified converting into an electrical signal by an amplification method employing an optical fiber amplified. It is expected that a number of optical parts composed of a narrow-band optical filter and an optical circular are used in the wavelength multiplexing communication system. Thus, the optical circular is one of optical devices in great demand for the large capacity optical communication system.

Optical circulators are roughly classified into a polarization-non-dependent type and a polarization-non-dependent type. The polarization-dependent type is characterized in that light transmitted through the optical circulator has a small attenuation factor. In this type, incident light is separated into two polarized lights in the optical circulator, thereafter coupled again, and there occurs no loss except unavoidable attenuation due to reflection or scattering when transmitting through its optical components. On the other hand, there are several types of polarization-non-dependent optical circulators. Japanese patent application laid-open Nos.55-93120(1980), 5-61001(1993) disclose typical polarization-non-dependent optical circulators. The polarization-non-dependent optical circulator in JPA laid-open No.55-93120 with four ports is composed of a Faraday rotator, a 45°rotatory polarizer, polarization separating prisms , and total reflection mirrors. On the other hand, the polarization-non-dependent optical circulator in JPA laid-open No.5-61001 is composed of birefringence crystal plates , a first group of rotator, and a second group of rotator. The first group of rotator is composed of reciprocal rotators, and the second group of rotator is composed of non-reciprocal rotators.

Furthermore, a circulation type of optical circulator is reported in previous paper No.C-3-69, IEICE, Electronics Society Meeting, 1997. This optical circulator is of a three-terminal perfect circulation type, where light is perfectly circulated from a first port to a second port, from the second port to a third port and from the third port to the first port. This type of optical circulator is characterized in that the loss can be lowered and the isolation and reflection attenuation factor can be increased.

However, there are several problems in the conventional optical circulators. Namely, in case of the optical circulator in JPA laid-open No.55-93120, part of the light transmitted through the Faraday rotator and 45° rotatory polarizer may be output(leaked) from another beam input/output port other than a predetermined beam input/output port, thereby deteriorating the isolation of the optical circulator. The level of the deterioration depends or the extinction ratio of the Faraday rotator and the polarization separation capability of the polarization separating prisms. For example, when a magnetic garnet is used as the Faraday rotator and a polarization beam splitter of glass is used as the polarization separating prisms, the isolation of the entire optical circulator is about 25 dB since, in general, the extinction ratio of the magnetic garnet is about 45 dB and the polarization separation capability of the polarization beam splitter of glass is about 25 dB. In general, it is difficult to enhance the polarization separation capability of the polarization beam splitter to be higher than 30 dB. Accordingly, it is difficult to enhance the isolation of the optical circulator in JPA laid-open No. 55-93120 to be higher than 30 dB.

On the other hand, in case of the optical circulator in JPA laid-open No.5-61001, part of the transmitted light (Lf) to be output from the beam input/output port may reach the beam input/output port, outputting as leakage light from there since the beam input/output ports are very clone to each other and the light is input and output from the birefringence plate which is used for both the ports. The leakage light is return light in the optical circulator, therefore reducing the isolation. Also, when light is reversely supplied to the beam input/output port, part of the light may be output as leakage light from the beam input/output port, thereby reducing the isolation. To prevent the deterioration in optical characteristics, the distance between the beam input/output ports needs to be increased. However, the birefringence plates, which are expensive elements, have to be thickened to do so. It causes an increase in the size of the optical circulator and an increase in manufacturing cost.

In case of the circulation type optical circulator, the number of the components to construct the circulation type must be increased. Therefore, the adjustment of the components is hard to conduct and the manufacturing cost is increased.

Accordingly, it is an object of the invention to provide a polarization-non-dependent optical circulator with a high isolation.

It is a further object of the invention to provide a circulation type optical circulator with a high isolation where the number of components used is decreased.

According to the invention, a polarization-non-dependent type optical circulator, comprises:
a plurality of polarization separating/coupling means where incident light from outside is separated into two polarized lights with polarization planes orthogonal to each other when the incident light is received by a first end portion and two internally transmitted polarized lights with polarization planes orthogonal to each other are coupled when the two internally transmitted polarized lights are received by a second end portion on the opposite side of the first end portion;
a plurality of polarization rotating means, each of which having a first end portion disposed opposite to the second end portion of the polarization separating/coupling means and a second end portion on the opposite side of the first end portion, where two polarized lights with polarization planes orthogonal to each other are rotated to have polarization planes parallel to each other when the two polarized lights are received by the first portion and two internally transmitted polarized lights with polarization planes parallel to each other are rotated to have polarization planes orthogonal to each other when the two internally transmitted polarized lights are received by the second end portion; and
an optical path determining means which is disposed on an optical path connected to the second end portion of the plurality of polarization rotating means and outputs two polarized lights with polarization planes parallel to each other to be input to the second end portion of one of the plurality of polarization rotating means to the second end portion of another of the plurality of polarization rotating means or to outside according to the direction of the polarization planes and an optical path through which the two polarized lights are input.

According to another aspect of the invention, a circulation-type optical circulator, comprises:
a plurality of polarization separating/coupling means where incident light from outside is separated into two polarized lights with polarization planes orthogonal to each other when the incident light is received by a first end portion and two internally transmitted polarized lights with polarization planes orthogonal to each other are coupled when the two internally transmitted polarized lights are received by a second end portion on the opposite side of the first end portion;
a plurality of polarization rotating means, each of which having a first end portion disposed opposite to the second end portion of the polarization separating/coupling means and a second end portion on the opposite side of the first end portion, where two polarized lights with polarization planes orthogonal to each other are rotated to have polarization planes parallel to each other when the two polarized lights are received by the first portion and two internally transmitted polarized lights with polarization planes parallel to each other are rotated to have polarization planes orthogonal to each other when the two internally transmitted polarized lights are received by the second end portion; and
an optical path determining means which is disposed on an optical path connected to the second end portion of the plurality of polarization rotating means and outputs two polarized lights with polarization planes parallel to each other to be input to the second end portion of one of the plurality of polarization rotating means to the second end portion of another of the plurality of polarization rotating means or to outside according to the direction of the polarization planes and an optical path through which the two polarized lights are input, the optical path determining means providing a structure of a perfect circulation type optical circulator.

The invention will be explained in more detail in conjunction with the appended drawings, wherein:
FIG.1 is an illustration showing a conventional optical circulator,
FIG.2 is an illustration showing another conventional optical circulator,
FIGS.3A to 3C are illustrations showing a conventional circulation-type optical circulator,
FIG.4A is an illustration showing an optical circulator in a first preferred embodiment according to the invention,
FIGS.4B to 4D are illustrations showing the state of light transmitted through between ports,
FIG.5A is an illustration showing an optical circulator in a second preferred embodiment according to the invention,
FIG.5B is an illustration showing an optical circulator in a third preferred embodiment according to the invention,
FIG.6 is an illustration showing an optical circulator in a fourth preferred embodiment according to the invention,
FIG.7 is an illustration showing an optical circulator in a fifth preferred embodiment according to the invention,
FIG.8 is an illustration showing an optical circulator in a sixth preferred embodiment according to the invention,
FIG.9 is an illustration showing an optical circulator in a seventh preferred embodiment according to the invention, and
FIGS.10A to 10C are illustrations showing an optical circulator in an eighth preferred embodiment according to the invention.

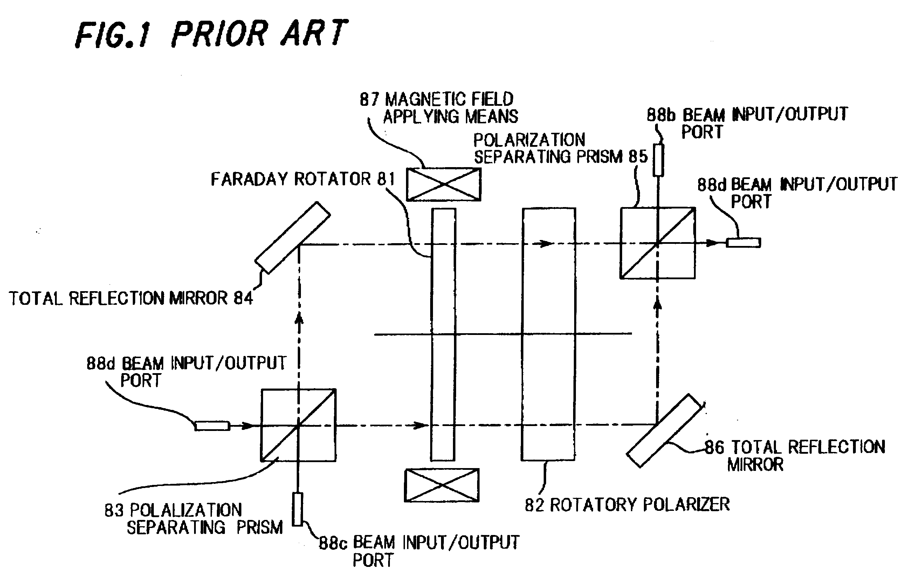

Before explaining an optical circulator in the preferred embodiment, the aforementioned conventional optical circulators will be explained in FIGS.1 to 3C.

FIG.1 shows a first example of the conventional polarization-non-dependent optical circulators. This polarization-non-dependent optical circulator with four ports is composed of a Faraday rotator 81, a 45° rotatory polarizer 82, polarization separating prisms 83, 85, and total reflection mirrors 84, 86. Also, 87 is a magnetic field applying means, and 88a, 88b, 88c and 88d are beam input/output ports.

In FIG.1, transmitted light input to the beam input/output port 88a is separated into two polarized lights by the polarization separating prism 83, and then one is passed through the total reflection mirror 84, Faraday rotator 81 and 45° rotatory polarizer 82 and the other is passed through the Faraday rotator 81, 45° rotatory polarizer 82 and total reflection mirror 86. Then, the two polarized lights are coupled at the polarization separating prism 85, output from the beam input/output port 88d. In the polarization separating prism 83, the incident light is separated into the polarized lights with two kinds of components orthogonal to each other. Both the two polarized lights output from the polarization separating prism 83 are transmitted through the Faraday rotator 81 and 45° rotatory polarizer 82 as parallel polarized lights, thereafter coupled by the polarization separating prism 85.

Further, transmitted light input to the beam input/output port 88b is reversely passed through the same paths as described above, reaching the beam input/output port 88c. In a similar manner, transmitted light input to the beam input/output port 88c reaches the beam input/output port 88d and transmitted light input to the beam input/output port 88d reaches the beam input/output port 88a. This type of optical circulator is characterized in that the polarization separating prisms 83, 85 are used.

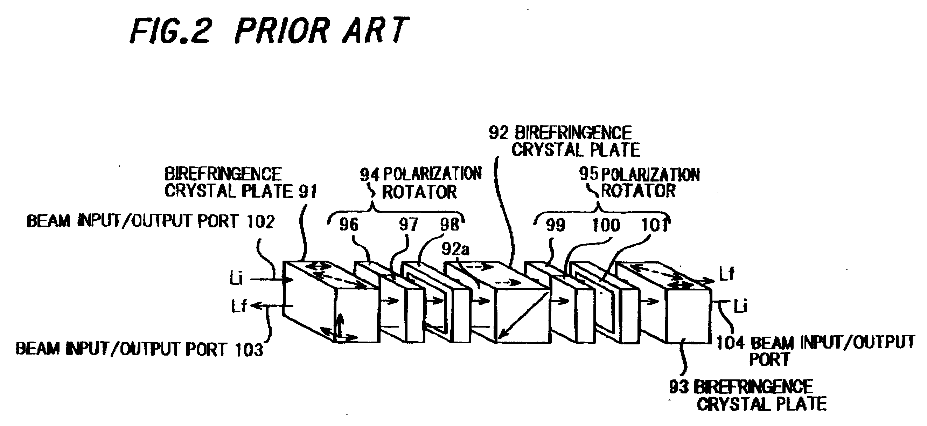

FIG.2 shows a second example of the conventional polarization-non-dependent optical circulators. This polarization-non-dependent optical circulator is composed of birefringerce crystal plates 91, 92 and 93, a first group of rotator 94, and a second group of rotator 95. The first group of rotator 94 is composed of reciprocal rotators 96 and 97, and a non-reciprocal rotator 98, and the second group of rotator 95 is composed of reciprocal rotators 99 and 100, and a non-reciprocal rotator 101. 102 is a beam input port, 103 is a beam output port, 104 is a beam input/output port, and 92a is an end surface of the birefringence crystal plate 92.

In this optical circulator, the rotation direction by the rotator 94 is so set that the separating directions of ordinary ray and extraordinary ray at the birefringence crystal plate 92 are different from those at the birefringence crystal plates 91, 93 and those at the birefringence crystal plates 91, 93 coincide with each other, and that the electric field oscillation directions of rays at the birefringence crystal plate 92 coincide with each other. Also, the rotation direction by the rotator 96 is so set that the polarization planes of rays at the birefringence crystal plate 92 are orthogonal to each other. A beam input to the beam input port 102 is output from the beam input/output port 104, and a beam input to the beam input/output port 104 is output from the beam output port 103.

The reciprocal rotator 96 and non-reciprocal rotator 99 have a structure that two birefringence crystal plates with different rotation directions of polarization plane to transmitted light are abutted in a plane perpendicular to the transmitted light. Two polarized lights with polarization planes perpendicular to each other are transmitted through the rotator, where the transmitted lights have polarization planes parallel to each other because the polarization planes are separately rotated to the different directions in the rotator. Then, the polarized lights are rotated to a common direction by the birefringence crystal plate 92, rotated by the reciprocal rotators 99, 100 to have two polarization planes orthogonal to each other like when going out of the birefringence crystal plate 91, coupled by the birefringence crystal plate 93, then output as output light Lf from the beam input/output port 104. When part of the output light Lf is input as return light to the birefringence crystal plate 93, it is rotated by an angle different from that in the previous incidence by the reciprocal rotators 100, 99, therefore the beam going out of the birefringence crystal plate 92 cannot be passed through the non-reciprocal rotator 98. Thus, it can serve as an optical circulator since the directional transmission of light can be conducted. This optical circulator is characterized in that its fabrication including the optical coupling is easy.

FIGS.3A to 3C show a circulation type optical circulator, where an integrated polarizing prism 124a is provided for a beam input/output port 121, an integrated polarizing prism 124b is provided for a beam input/output port 122, and an integrated polarizing prism 124c is provided for a beam input/output port 123. Between the integrated polarizing prisms 124a and 124b, an integrated polarizing prism 125 is disposed. The integrated polarizing prism 125 has upper and lower polarization planes 125a, 125b, and a birefringence plate 126a is disposed nearby the bottom of the integrated polarizing prism 125, and a total reflection mirror 127 with a quarter-wave plate 127a adhered is disposed behind the birefringence plate 126a. Further, between the integrated polarizing prism 125 and the beam input/output port 121, a Faraday rotator 129a with a half-wave plate 128a adhered is disposed facing to the transmission direction of the polarization plane 125b. Between the integrated polarizing prism 125 and the beam input/output port 122, a Faraday rotator 129b with a half wave plate 128b adhered is disposed opposite to the half-wave plate 128a. Between the Faraday rotator 129b and the integrated polarizing prism 125, a birefringence place 126b is disposed. Further, between the polarization plane 125a of the integrated polarizing prism 125 and the integrated polarizing prism 124c, a Faraday rotator 129c with a half-wave plate 128c adhered is disposed.

Referring to FIG.3A, when light is transmitted from the beam input/output port 121 to the beam input/output port 122, the light is separated into two waves by the integrated polarizing prism 124a, and then both the two waves are converted into P polarized light by the Faraday rotator 129a and the half-wave plate 128a with an optical axis inclined by ±22.5. The two P polarized lights are transmitted through the integrated polarizing prism 125 as they are, forwarded shifting their positions as extraordinary rays by the birefringence plate 126b. Then, they are polarized, contrarily to the case by the half-wave plate 128a and Faraday rotator 129a, by the half-wave plate 128b and the Faraday rotator 129b, thereafter coupled into a beam with two orthogonal polarized lights by the integrated polarizing prism 124b, then output from the beam input/output port 122.

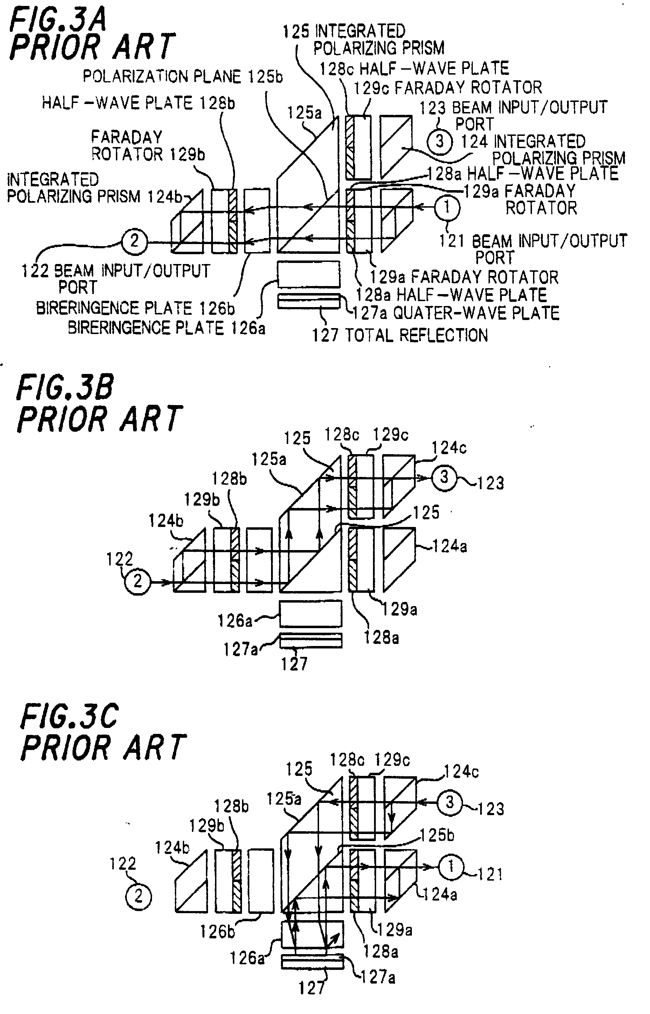

Also, referring to FIG.3B, when light is transmitted from the beam input/output port 122 to the beam input/output port 123, the light is transmitted through the polarization plane of the integrated polarizing prism 124b, Faraday rotator 129b, half-wave plate 128b, birefringence plate 126b, polarization plane 125b of the integrated polarizing prism 125, polarization plane 125a, half-wave plate 128c, Faraday rotator 129c and integrated polarizing prism 124c to the beam input/output port 123. In this case, the light is transmitted through the Faraday rotator 129b, half-wave plate 128b and birefringence plate 126b as ordinary rays, and it is converted into S polarized light at the integrated polarizing prism 125.

Further, referring to FIG.3C, when light is transmitted from the beam input/output port 123 to the beam input/output port 121, the light is transmitted through the integrated polarizing prism 124c, Faraday rotator 129c, half-wave plate 128c, polarization plane 125a of the integrated polarizing prism 125, polarization plane 125b, birefringence plate 126a, total reflection mirror 127, birefringence plate 126a, polarization plane 125b of the integrated polarizing prism 125, half-wave plate 128a, Faraday rotator 129a and integrated polarizing prism 124a to the beam input/output port 121. In this case, the light is converted into S polarized light at integrated polarizing prism 125 and it is transmitted through the birefringence plate 126a as extraordinary rays. Here, the light reflected by the total reflection mirror 127 is converted into polarized lights orthogonal to each other and forwarded shifting their position since the quarter-wave plate 127a with an optical axis of 45° and total reflection mirror 127 are disposed facing to the polarization plane 125b of the integrated polarizing prism 125. The lights are supplied through the integrated polarizing prism 125 to the beam input/output port 121, then coupled at the beam input/output port 121.

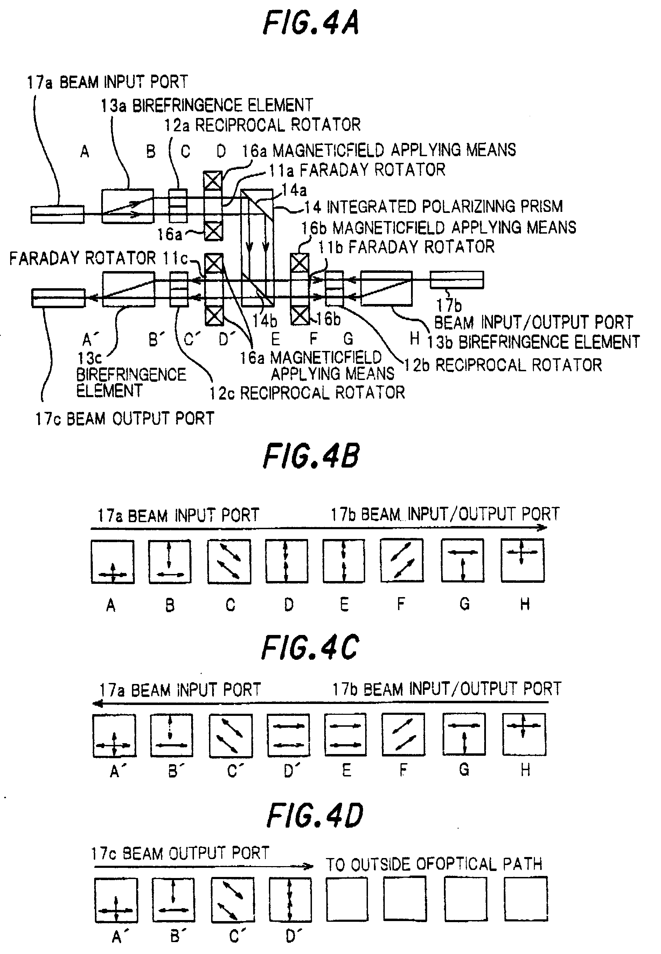

Next, an optical circulator in the first preferred embodiment will be explained in FIGS.4A to 4D. FIG.4A shows the composition of a polarization-non-dependent type optical circulator, and FIGS.4B to 4D show the states of light transmitted between ports.

First, the composition of the optical circulator in the first embodiment will be explained. 14 is an integrated polarizing prism as an optical path determining part, which has two reflection/transmission planes 14a, 14b. On the light-inputting path of the integrated polarizing prism 14, there is disposed a Faraday rotator 11a with a magnetic filed applying means 16a using an electric coil etc. Prior to the Faraday rotator 11a, there are in series disposed a reciprocal rotator 12a, a birefringence element 13a as a polarization separating and coupling part and a beam input port 17a. Also, on the light-inputting/outputting path of the integrated polarizing prism, there is disposed a Faraday rotator 11b which is provided with a magnetic filed applying means 16b. On the side of the Faraday rotator 11b facing to a beam input/output port 17b, a reciprocal rotator 12b and a birefringence element 13b are disposed. Furthermore, on the light-outputting path of the integrated polarizing prism 14, there are in series disposed a Faraday rotator 11c with a magnetic filed applying means 16c, a reciprocal rotator 12c, a birefringence element 13c and a beam input/output port 17c. Here, each of pairs of the reciprocal rotator 12a and Faraday rotator 11a, 12b and 11b, and 12c and 11c composes a polarization rotating part.

In FIG.4A, arrows, which are attached on lines showing the transmitted lights, indicate separated two polarized lights to be transmitted through, and the directions of transmitted lights before separation and after coupling. FIGS.4B to 4D show the directions of lights at the respective components disposed between the ports in the composition shown in FIG.4A. FIG.4B relates to forward light transmitted from the beam input port 17a to the beam input/output port 17b, FIG. 4C relates to forward light transmitted from the beam input/output port 17b to the beam output port 17c, and FIG.4D relates to light to be input to the beam output port 17c and output to the outside of the optical path of the optical circulator.

In the composition shown in FIG.4A, light shown at 'A' in FIG.4B is supplied to the birefringence element 13a, then separated into two linear polarized lights shown at 'B' in FIG.4B with polarization planes perpendicular to each other. Then, the two waves are supplied to the reciprocal rotator 12a, where both are rotated by 45° as shown at 'C' in FIG.4B. However, the two polarized lights are transmitted through regions with different rotation directions in the polarization plane because the reciprocal rotator 12a has a composition that two elements with different rotation directions are abutted. Therefore, the polarization planes of the two polarized lights after transmission are parallel to each other. Then, the two polarized lights are transmitted through the Faraday rotator 11a as they are separated, and their polarization planes are thereby rotated by 45° to have the same direction as shown at 'D' in FIG.4B. Further, they are twice reflected in the integrated polarizing prism 14, both rotated by 45° as shown at 'D' in FIG.4B by the Faraday rotator 11b, supplied to the reciprocal rotator 12b as they are still separated. Then, they are rotated to give two linear polarized lights with polarization planes perpendicular to each other in the reciprocal rotator 12b as shown at 'G' in FIG.4B, coupled again as shown in 'H' in FIG.4B in the birefringence element 13b, output from the beam input/output port 17b. In this case, the birefringence elements 13a, 13b are so disposed that the two polarized lights have the same optical transmission length (optical path length) from the separation by the birefringence element 13a to the coupling by the birefringence element 13b.

Also, light input to the beam input/output port 17b as shown at 'H' in FIG.4C is transmitted through the birefringence element 13b, reciprocal rotator 12b. Faraday rotator 11b, integrated polarizing prism 14a, Faraday rotator 11c, reciprocal rotator 12c and birefringence element 13c without being reflected by the integrated polarizing prism 14, then output from the beam output port 17c. Also in this case, the birefringence elements 13b, 13c are so disposed that the two lights have the same optical transmission length (optical path length).

In detail, the incident light is separated into two waves shown at 'G' in FIG.4C by the birefringence element 13b, then both rotated by 45° as shown at 'F' in FIG.4C by the reciprocal rotator 12b. Further, they are rotated to give the polarization planes parallel to each other as shown at 'E' in FIG.4C by the Faraday rotator 11b, transmitted through the integrated polarizing prism 14 as they are as shown at 'D'' in FIG.4C, supplied to the Faraday rotator 11c. Then, they are rotated by 45° as shown at 'C'' in FIG.4C by the Faraday rotator 11c, then rotated by the reciprocal rotator 12c to give two polarization planes perpendicular to each other as shown at 'B'' in FIG.4C. Then, the two waves are coupled by the birefringence element 13c as shown at 'A'' in FIG.4C, output from the beam input/output port 17c.

Meanwhile, when light shown at 'A'' in FIG.4D is input to the beam output port 17c, the incident light is separated into two linear polarized lights with polarization planes perpendicular to each other as shown at 'B'' in FIG.4D by the birefringence element 13c, and then the two polarization planes are rotated by 45° as shown at 'C'' in FIG.4D. Then, the two polarized lights are transmitted through the Faraday rotator 11c as they are separated, and both the polarization planes are thereby rotated by 45° to have the same direction as shown at 'D'' in FIG.4D, then supplied to the integrated polarizing prism 14. However, they are reflected by the reflection/transmission plane 14b existing on the light-outputting path of the Faraday rotator 11c and output to the outside of the optical path. Therefore, such light can be connected with neither the beam input/output port 17b nor the beam input port 17a.

As explained above, in the optical circulator composed as shown in FIG.4A, the polarization separating and coupling part and polarized light rotating part through which the light is input and output are perfectly separated between the beam input/output ports. Therefore, leakage light between the ports, which may occur in the conventional optical circulators in FIGS.1 and 2, does not occur. Thus, the reduction in isolation can be prevented.

The integrated polarizing prism 14 has the composition that two polarization beam splitters, which are conventionally used, are in series connected, and its polarization separation capability is equal to that of a conventional polarization beam splitter. However, in the optical circulator of the first embodiment, exact return light is much less than that in the conventional optical circulator in FIG.1. Detailing the reason, light to be input to the beam input/output port 17b and output from the beam input port 17a as return light is twice reflected on the polarization/reflection planes in the integrated polarizing prism 14. On each of the reflections, attenuation corresponding to the polarization separation capability of the polarizing prism part of the integrated polarizing prism 14 is given. For example, when the attenuation level is 25 dB per one reflection, the return light is totally subject to an attenuation level of 50 dB. On the other hand, light to be input to the beam output port 17c and output from the beam input/output port 17b as return light is only once transmitted through the polarizing prism part of the integrated polarizing prism 14. Thus, according the above example, the return light is subject to an attenuation level of 25 dB.

Meanwhile, the reciprocal rotator 12a to 12c are suitably composed of birefringence crystal. Here, the polarization separation distances for ordinary rays and extraordinary rays by the birefringence crystal need to be equal to each other between ports, and further the optical transmission lengths (optical path lengths) reaching the position where the two separated polarized lights to be transmitted through the optical circulator are coupled again need to be equal to each other. Thereby, a high isolation, which is difficult to obtain in the conventional polarization-non-dependent tee optical circulator, can be obtained.

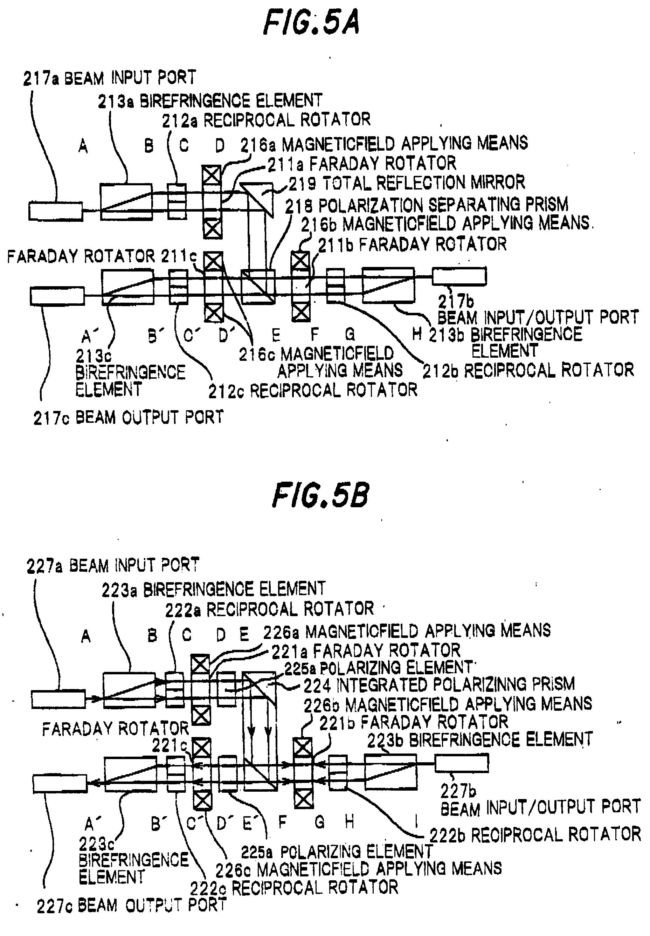

Optical circulators in the second and third preferred embodiments according to the invention will be explained in FIGS.5A and 5B, respectively. Both of these optical circulators are of polarization-non-dependent type and three-terminal type.

In the second embodiment shown in FIG.5A, Faraday rotators 211a, 211b and 211c correspond to the Faraday rotators 11a, 11b and 11c in FIG.4A, reciprocal rotators 212a, 212b and 212c to the reciprocal rotators 12a, 12b and 12c in FIG. 4A, birefringence elements 213a, 213b and 213c to the birefringence elements 13a, 13b and 13c in FIG.4A, and magnetic field applying means 216a, 216b and 216c to the magnetic field applying means 16a, 16b and 16c in FIG.4A. Also, 217a is a beam input port, 217b is a beam input/output port and 217c is a beam output port.

The optical circulator in the second embodiment in FIG.5A is further composed of a polarization separating prism 218 and a total reflection mirror 219, which substitute for the integrated polarizing prism 14 in FIG.4A. This composition is suitable for the case that the transmitted light to be input to the beam input/output port 17b and output from the beam input port 17a in FIG.4A does not need to have so high attenuation level. Moreover, the cost can be thereby reduced as compared with the case of using the integrated polarizing prism 14. Also, for the reciprocal rotators 212a, 212b and 212c by which two polarized lights are rotated by 45° reversely to each other, a half-wave plate or a 45° rotatory polarizer can be used.

In operation, light is input to the beam input port 217a, separated into linear polarized lights with polarization planes perpendicular to each other by the birefringence element 213a as shown at 'B' in FIG.4B, and then both the polarization planes are rotated by 45° by the reciprocal rotator 212a as shown at 'C' in FIG.4B. Then, the polarization planes of the two polarized lights are rotated by 45° by the Faraday rotator 211a to have the same direction as shown at 'D' in FIG.4B, Then, they are reflected by the total reflection mirror 219 and polarization separating prism 218, rotated by 45° by the Faraday rotator 211b as shown at 'F' in FIG.4B, input to the reciprocal rotator 212b, rotated by the reciprocal rotator 212b to give two linear polarized lights with polarization planes perpendicular to each other as shown at 'G' in FIG.4B, coupled again by the birefringence element 213b as shown at 'H' in FIG.4B, output from the beam input/output port 217b.

Also, light to be input to the beam input/output port 217b is separated into two waves by the birefringence element 213b as shown at 'G' in FIG.4C, both rotated by 45° by the reciprocal rotator 212b as shown at 'F' in FIG.4C. Then, they are rotated by the Faraday rotator 211b to give parallel polarization planes as shown at 'E' in FIG.4C, transmitted through the polarization separating prism 218 as they are as shown at 'D'' in FIG.4C, input to the Faraday rotator 211c, both rotated by 45° by the Faraday rotator 211c as shown at 'C'' in FIG.4C, rotated by the reciprocal rotator 212c to give polarization planes perpendicular to each other ass perpendicular to each other as shown at 'B'' in FIG.4C. Then, the two waves are coupled by the birefringence element 213c as shown at 'A'' in FIG.4C, output from the beam output port 217c.

Further, when light shown at 'A'' in FIG.4D is input to the beam output port 217c, they are separated into two linear polarized lights with polarization planes perpendicular to each other by the birefringence element 213c as shown at 'B'' in FIG.4D. Then, their polarization planes are rotated by 45° by the reciprocal rotator 212c as shown at 'C'' in FIG.4D. Then, the two polarized lights are input to the Faraday rotator 211c as they are separated, and both the polarization planes are thereby rotated by 45° to have the same direction as shown at 'D'' in FIG.4D, then supplied to the polarization separating prism 218. However, they are reflected by the reflection/transmission plane 214a existing on the light-outputting path of the Faraday rotator 211c and output to the outside of the optical path. Therefore, such light can be connected with neither the beam input/output port 217b nor the beam input port 217a.

Next, the optical circulator in the third embodiment, which is of three-terminal type, will be explained in FIG.5B.

In the third embodiment shown in FIG.5B, Faraday rotators 221a, 221b and 221c correspond to the Faraday rotators 211a, 211b and 211c in FIG.5A, reciprocal rotators 222a, 222b and 222c to the reciprocal rotators 212a, 212b and 212c in FIG.5A, birefringence elements 223a, 223b and 223c to the birefringence elements 213a, 213b and 213c in FIG.5A, and magnetic field applying means 226a, 226b and 226c to the magnetic field applying means 216a, 216b and 216c in FIG.5A. Also, an integrated polarizing prism 224 corresponds to the integrated polarizing prism 14 in FIG.4A. 227a is a beam input port, 227b is a beam input/output port and 227c is a beam output port.

The third embodiment is different from the second embodiment in that it employs the integrated polarizing prism 224, but the other components and the optical paths are mostly common to each other. Therefore, their explanations are omitted. As compared with the optical circulator in FIG.4A, the optical circulator in FIG.5B has a composition that two polarizing elements are added. Namely, the polarizing element 225a is disposed between the Faraday rotator 221a and the integrated polarizing prism 224, and the polarizing element 225b is disposed between the Faraday rotator 221c and the integrated polarizing prism 224.

The optical circulator in the third embodiment is suitable for the case that the quantity of return light to be input to the beam output port 227c is so much. The return light to be output can be reduced by using the polarizing elements 225a, 225b. The polarizing elements are suitably of polarization glass, and its extinction ratio, e.g., 40 to 50 dB, is much greater than that of a polarization prism. By using the polarizing elements 225a, 225b, the quantity of two return lights, which are caused by that part of the light to be input to the beam input/output port 227b is leaked to the beam input/output port 227b and part of the light to be input to the beam output port 227c reaches the beam input/output port 227b, is further reduced by 40 to 50 dB in addition to the attenuation due to the transmission through the polarization prism part. Thus, the quantity is sufficiently reduced to the practical level.

In this case, the polarizing elements 225a, 225b need to be so disposed that the directions transmissible through the polarizing elements 225a, 225b coincide with the directions of the polarization planes of the forward transmitting light to be input to the beam input port 227a and output from the beam input/output port 227b and the transmitting light to be input to the beam input/output port 227b and output from the beam output port 227c when they are transmitted through the polarizing elements 225a, 225b. Meanwhile, the upper prism part of the integrated polarizing prism 224 may be replaced by a total reflection mirror etc. Even in this case, an increase in the quantity of return light is negligible.

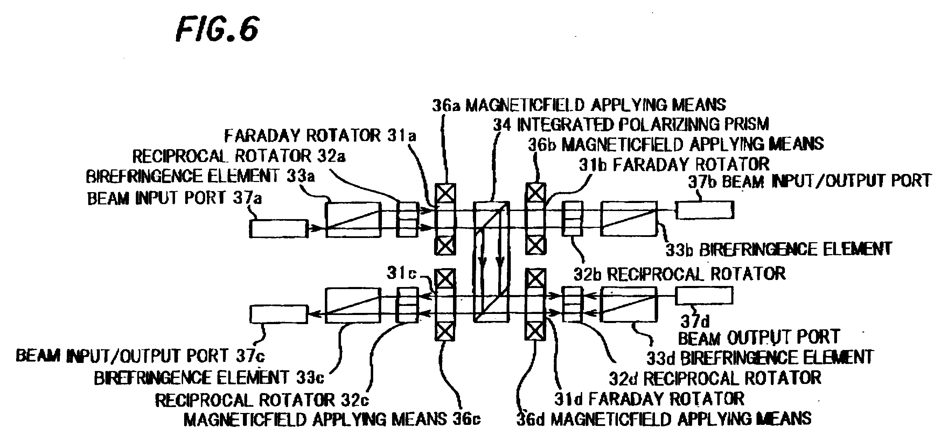

An optical circulator in the fourth embodiment will be explained in FIG.6.
The optical circulator is of polarization-non-dependent and four-terminal type, where one terminal is added to the three-terminal composition in FIG.4A.

In the fourth embodiment shown in FIG.6, Faraday rotators 31a, 31c and 31d correspond to the Faraday rotators 11a, 11b and 11c in FIG.4A, reciprocal rotators 32a, 32c and 32d to the reciprocal rotators 12a, 12b and 12c in FIG.4A, birefringence elements 33a, 33c and 33d to the birefringence elements 13a, 13b and 13c in FIG.4A, an integrated polarizing prism 34 to the integrated polarizing prism 14 in FIG.4A, magnetic field applying means 36a, 36c and 36d to the magnetic field applying means 16a, 16b and 16c in FIG.4A, and an beam input port 37a to the beam input port 17a in FIG.4A. Also, 37c is a beam input/output port which is connected to the birefringence element 33a, and 37d is a beam output port which is connected to the birefringence element 33d.

In addition to this composition similar to that in FIG.4A, the four-terminal type optical circulator in the fourth embodiment is further composed of a Faraday rotator 31b which is disposed on the exit side of the integrated polarizing prism 34 extending from the output optical path of the Faraday rotator 31a and has a magnetic field applying means 36b, and a reciprocal rotator 32b, a birefringence element 33b and a beam input/output port 37b which are disposed in this order after the Faraday rotator 31b.

In the optical circulator shown in FIG.6, forward transmitting light from the beam input port 37a is transmitted through the birefringence element 33a, reciprocal rotator 32a, Faraday rotator 31a, integrated polarizing prism 34, Faraday rotator 31b, reciprocal rotator 32b and birefringence element 33b to the beam input/output port 37b. Also, forward transmitting light from the beam input/output port 37d is transmitted through the birefringence element 33d, reciprocal rotator 32d, Faraday rotator 31d, integrated polarizing prism 34, Faraday rotator 31c, reciprocal rotator 32c and birefringence element 33c to the beam input/output port 37c. Further, forward transmitting light from the beam input/output port 37c is transmitted to the beam output port 37d. Here, the beam output port 37d is used only for outputting, i.e., no light is input to this port. The rotation directions of light by the respective components are similar to those shown in FIG.4B to 4D, and their explanations are therefore omitted.

Meanwhile, in the optical circulator in FIG.6, incident light from the beam output port 37d is return light and can be attenuated inside the optical circulator. Also, in this composition, part of the integrated polarizing prism 34 cannot be replaced by a total reflection mirror etc.

In the optical circulator in FIG.6, the polarization separating and coupling part and polarized light rotating part through which the light is input and output are perfectly separated between the beam input/output ports. Therefore, leakage light between the ports, which may occur in the conventional optical circulators in FIGS.1 and 2, does not occur. Thus, the reduction in isolation can be prevented. Also, the transmission of return light through the optical circulator, which is caused by the lowering of polarization separation capability in the integrated polarizing prism, can be improved by inserting a polarizing element like the case of the three-terminal optical circulator.

In the composition in FIG.6, there are three kinds of return lights, i.e., (i) return light from the beam input/output port 37b to the beam input port 37a, (ii) return light from the beam input/output port 37c to the beam input/output port 37b, and (iii) return light from the beam output port 37d to the beam input/output port 37c. The return light (ii) is twice transmitted through the prism part of the integrated polarizing prism, and therefore its quantity is negligible. Also, the quantity of the return light (iii) is generally supposed to be little since the beam output port 37d is used only for outputting. However, the quantity of the return light (i) may be not always little since it is only once transmitted through the prism part of the integrated polarizing prism and further the beam input/output port 37b is usually used as a signal input port, and the quantity of the return light to the beam input port 37a maybe not always less than that in the conventional optical circulator in FIG.1. In this case, the quantity of the return light can be effectively reduced by disposing a polarizing element in the optical path. Such an improvement will be described below.

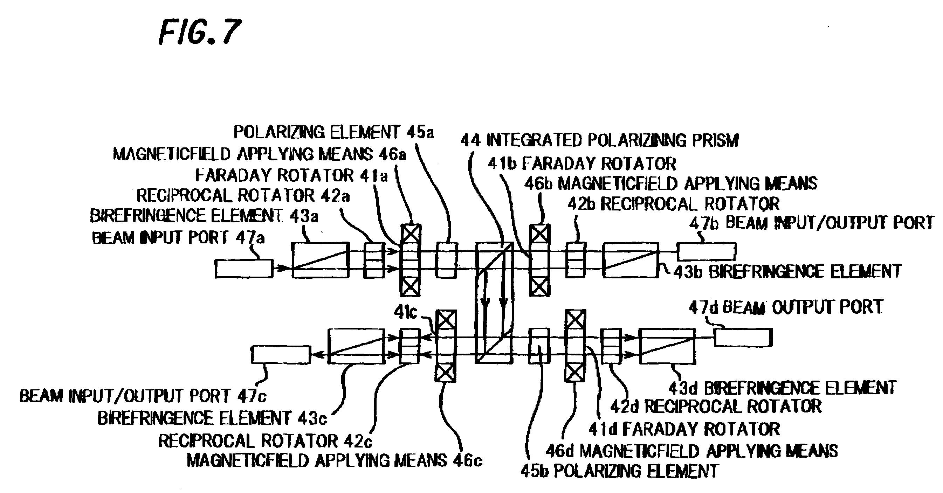

An optical circulator in the fifth embodiment will be explained in FIG.7.
The optical circulator in the fifth embodiment is composed by adding two polarizing elements to the polarization-non-dependent type optical circulator in the fourth embodiment in FIG.6.

In the fifth embodiment shown in FIG.7, Faraday rotators 41a, 41b and 41c correspond to the Faraday rotators 31a, 31b and 31c in FIG. 6, reciprocal rotators 42a, 42b, 42c and 42d to the reciprocal rotators 32a, 32b, 32c and 32d in FIG.6, birefringence elements 43a, 43b and 43c to the birefringence elements 33a, 33b and 33c in FIG.6, an integrated polarizing prism 44 to the integrated polarizing prism 34 in FIG.6, magnetic field applying means 46a, 46b and 46c to the magnetic field applying means 36a, 36b and 36c in FIG.6, an beam input port 47a to the beam input port 37a in FIG.6, an beam input/output port 47c to the beam input/output port 37c in FIG.6, and an beam output port 47d to the beam input/output port 37d in FIG.6. Also, 47b is a beam input port which is connected to the biefringence element 43b. 45a and 45b are the additional polarizing elements, where the polarizing element 45a is disposed between the Faraday rotator 41a and the integrated polarizing prism 44 and the polarizing element 45b is disposed between the integrated polarizing prism 44 and the Faraday rotator 41d.

The polarizing element 45a serves to effectively reduce the quantity of return light from the beam input/output port 47b to the beam input port 47a, and the polarizing element 45b serves to effectively reduce the quantity of return light from the beam output port 47d to the beam input/output port 47c.

Meanwhile, return light from the beam input/output port 47c to the beam input/output port 47b is not transmitted through any of the polarizing elements 45a, 45b, and therefore it is not subject to the attenuation of the polarizing elements 45a, 45b. However, the quantity of the return light is sufficiently little because the return light is twice transmitted through the prism part of the integrated polarizing prism 44.

By disposing the polarizing elements 45a, 45b in the optical path as shown in FIG.7, the intensity of return lights (i), (iii) of the three kinds of return lights is further reduced by a level corresponding to the extinction ratio of the polarizing element, e.g., 40 to 50 dB in case of polarization glass. Also, the quantity of the return light (ii) is reduced to a negligible level because the return light is not transmitted through any of the polarizing elements but twice transmitted through the integrated polarizing prism. These functions are also applicable to an optical circulator with five or more terminals by using a like composition.

As explained above, the optical circulator is composed separating into the three blocks of polarization separating and coupling part, polarization rotating part and optical path determining part, and adding the polarizing elements in the optical path. Therefore, the quantity of return light transmitted through the optical circulator can be reduced, thereby realizing an optical circulator with such a high isolation that could not be obtained in the conventional optical circulator.

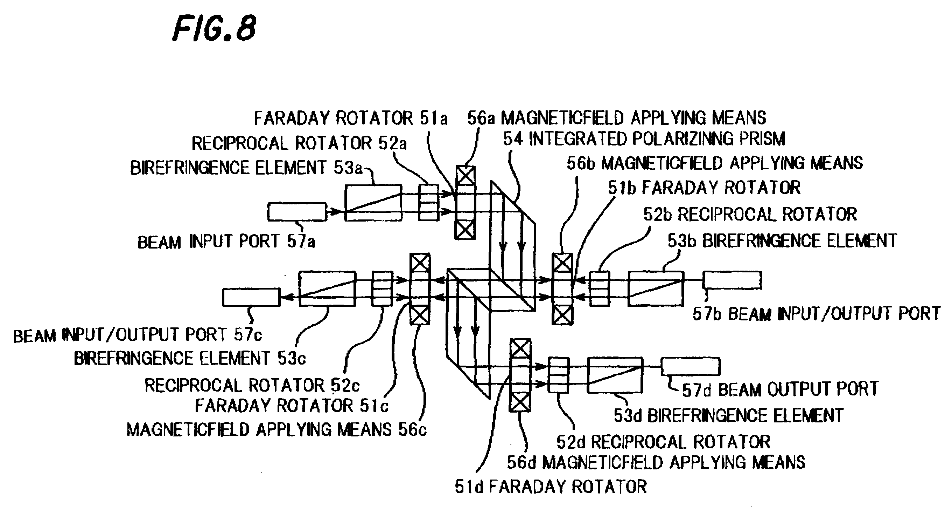

An optical circulator in the sixth embodiment will be explained in FIG.8. This optical circulator is also of four-terminal type, and an integrated polarizing prism 54 is disposed among Faraday rotators 51a, 51b, 51c and 51d as shown in FIG.8. The integrated polarizing prism 54 has a structure that the integrated polarizing prisms 14, 34 and 44 in the first, fourth and fifth embodiments are altered to have one prism part and two of the integrated polarizing prisms are connected longitudinally and partly overlapped, i.e., both the prism parts being connected opposite to each other.

On the input optical path of the integrated polarizing prism 54 toward a beam input port 57a, a Faraday rotator 51a, a reciprocal rotator 52a and a birefringence element 53a are in series disposed. On the output optical path extending from the second reflection plane of the integrated polarizing prism 54, a Faraday rotator 51b, a reciprocal rotator 52b, a birefringence element 53b and a beam input/output port 57b are in series disposed. On the transmission optical path extending from the third reflection plane of the integrated polarizing prism 54, a Faraday rotator 51c, a reciprocal rotator 52c, a birefringence element 53c and a beam input/output port 57c are in series disposed. Further, on the output optical path extending from the fourth reflection plane of the integrated polarizing prism 54, a Faraday rotator 51d, a reciprocal rotator 52d, a birefringence element 53d and a beam output port 57d are in series disposed. The Faraday rotators 51a, 51b, 51c and 51d are provided with magnetic field applying means 56a, 56b, 56c and 56d, respectively.

In operation, light to be input to the beam input port 57a is transmitted through the birefringence element 53a, reciprocal rotator 52a, Faraday rotator 51a, integrated polarizing prism 54 (twice reflected by the upper half part), Faraday rotator 51b, reciprocal rotator 52b and birefringence element 53b to the beam input/output port 57b. In this case, the operations of the birefringence element, reciprocal rotator and Faraday rotator are similar to those in the above embodiments, therefore their explanations are omitted.

Also, light to be input to the beam input/output port 57b is transmitted through the birefringence element 53b, reciprocal rotator 52b, Faraday rotator 51b, integrated polarizing prism 54 (transmitted), Faraday rotator 51c, reciprocal rotator 52c and birefringence element 53c to the beam input/output port 57c. Further, light to be input to the beam input/output port 57c is transmitted through the birefringence element 53c, reciprocal rotator 52c, Faraday rotator 51c, integrated polarizing prism 54 (twice reflected by the lower half part), Faraday rotator 51d, reciprocal rotator 52d and birefringence element 53d to the beam output port 57d. Here, the beam output port 57d is used only for outputting, i.e., no light is input to this port.

The optical circulator composed as shown in FIG. 8 can obtain effects similar to those in the optical circulator in FIG.6. Also, the polarization separating and coupling part and polarized light rotating part through which the light is input and output are perfectly separated between the beam input/output ports. Therefore, leakage light between the ports does not occur. Thus, the reduction in isolation can be prevented.

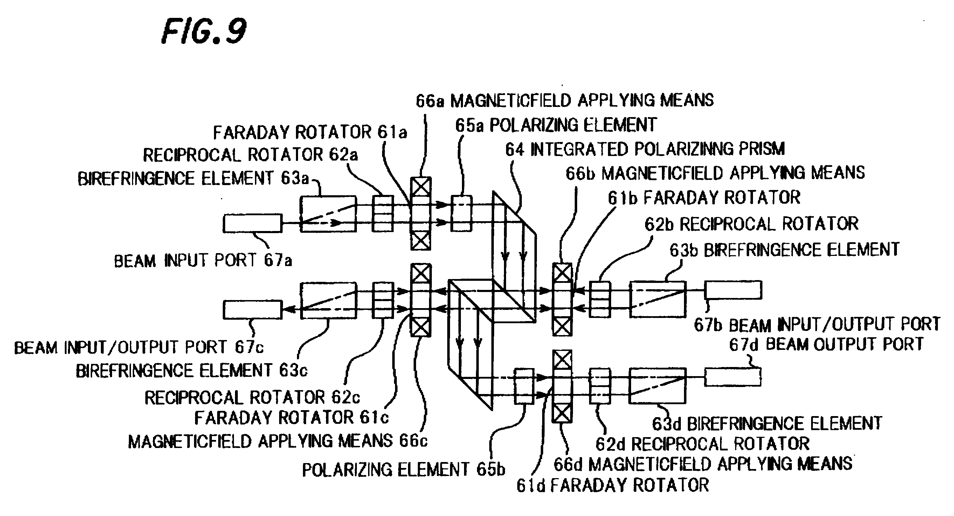

An optical circulator in the seventh embodiment will be explained in FIG.9.
The optical circulator in the seventh embodiment is also of four-terminal type like the optical circulator in FIG.8.

In the seventh embodiment shown in FIG.9, Faraday rotators 61a, 61b, 61c and 61d correspond to the Faraday rotators 51a, 51b, 51c and 51d in FIG.8, reciprocal rotators 62a, 62b, 62c and 62d to the reciprocal rotators 52a, 52b, 52c and 52d in FIG.8, birefringence elements 63a, 63b, 63c and 63d to the birefringence elements 53a, 53b, 53c and 53d in FIG.8, an integrated polarizing prism 64 to the integrated polarizing prism 54 in FIG.8, magnetic field applying means 66a, 66b, 66c and 66d to the magnetic field applying means 56a, 56b, 56c and 56d in FIG.8, an beam input port 67a to the beam input port 57a in FIG.8, an beam input/output port 67b to the beam input/output port 57b in FIG.8, an beam input/output port 67c to the beam input/output port 57c in FIG.8, and an beam output port 67d to the beam input/output port 57d in FIG.8.

The optical circulator in the seventh embodiment is composed by adding two polarizing elements to the optical circulator in the sixth embodiment. Namely, a polarizing element 65a is disposed between the Faraday rotator 61a and the integrated polarizing prism 64, and a polarizing element 65b is disposed between the integrated polarizing prism 64 and the Faraday rotator 61d.

In the optical circulators shown in FIGS.8 and 9, the shape of the integrated polarizing prism differs from that in the other embodiments. Along With this difference, the positions of the beam input/output ports 57b, 57c are changed. Meanwhile, in the optical circulator shown in FIGS.5A to 8, due to having no polarizing element, the birefringence elements are so disposed that the two polarized lights have the same optical transmission length (optical path length) from the separation by the birefringence element on the input side to the coupling by the birefringence element on the output side.

The optical circulator in the seventh embodiment has three optical paths between ports like the optical circulator in the sixth embodiment, and the respective optical paths work similarly except for the polarizing elements 65a, 65b. Therefore, their explanations are omitted. Also, the optical circulator in the seventh embodiment can obtain effects similar to those in the optical circulator in FIG.8. Namely, the polarization separating and coupling part and polarized light rotating part through which the light is input and output are perfectly separated between the beam input/output ports. Therefore, leakage light between the ports does not occur. Thus, the reduction in isolation can be prevented. In addition, by adding the polarizing elements 65a, 65b, the quantity of the return light from the beam output port 67d to the beam input/output port 67c and return light from the beam input/output port 67b to the beam input port 67a can be effectively reduced.

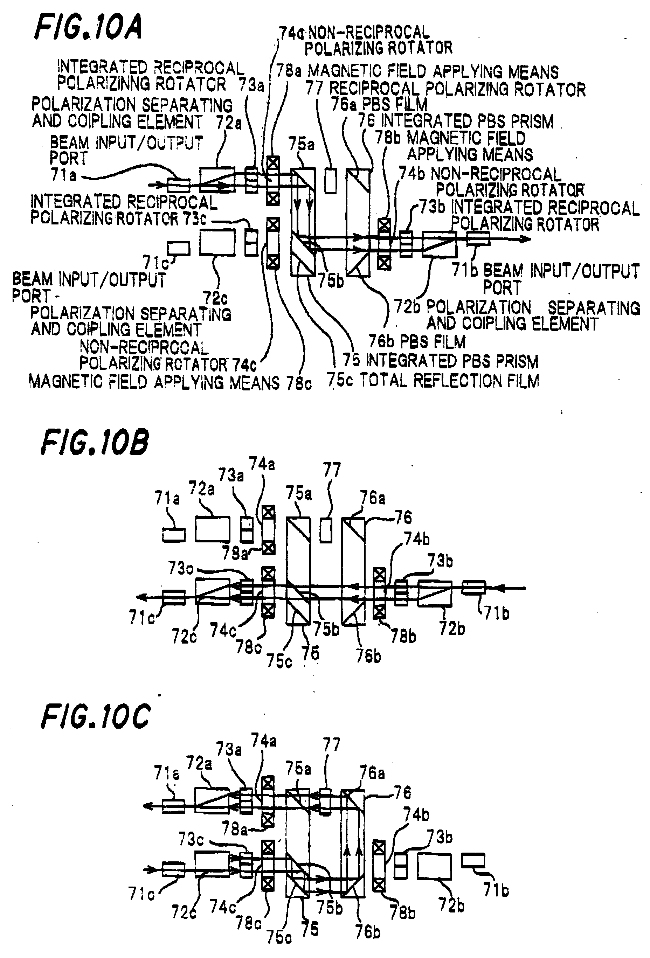

An optical circulator in the eighth embodiment will be explained in FIGS.10A to 10C. The optical circulator in the eighth embodiment is characteristic of three-terminal perfect circulation type.

FIG.10A shows an optical path in the case that light is input to a beam input/output port 71a, FIG.10B shows an optical path in the case that light is input to a beam input/output port 71b, and FIG.10C shows an optical path in the case that light is input to a beam input/output port 71c.

The optical circulator in the eighth embodiment is composed of the beam input/output ports 71a, 71b and 71c, polarization separating and coupling elements 72a, 72b and 72c, integrated reciprocal polarizing rotators 73a, 73b and 73c, non-reciprocal polarizing rotators 74a, 74b and 74c, a first integrated PBS(polarization beam splitter) prism 75, a second integrated PBS prism 76 and a reciprocal polarizing rotator 77. Between the beam input/output port 71a and the integrated PBS prism 75, the polarization separating/coupling element 72a, integrated reciprocal polarizing rotator 73a and non-reciprocal polarizing rotator 74a are disposed in series from the beam input/output port 71a. Also, between the beam input/output port 71b and the integrated PBS prism 76, the polarization separating/coupling element 72b, integrated reciprocal polarizing rotator 73b and non-reciprocal polarizing rotator 74b are disposed in series from the beam input/output port 71b. Further, between the beam input/output port 71c and the integrated PBS prism 75, the polarization separating/coupling element 72c, integrated reciprocal polarizing rotator 73c and non-reciprocal polarizing rotator 74c are disposed in series from the beam input/output port 71c. Here, the polarization separating/coupling elements 72a, 72b and 72c compose the polarization separating/coupling part, the integrated reciprocal polarizing rotator 73 and non-reciprocal polarizing rotator 74 compose polarization rotating part, and the integrated PBS prisms 75, 76 and reciprocal polarizing rotator 77 compose the optical path determining part.

The integrated PBS prism 75 is compose of two PBS films 75a, 75b and total reflection film 75c. The PBS film 75a is positioned opposite to the non-reciprocal polarizing rotator 74a, and the PBS film 75b is positioned opposite to the non-reciprocal polarizing rotator 74c. Also, the integrated PBS prism 76 is compose of PBS film 76a and total reflection film 76b, where the PBS film 76a is positioned opposite to the PBS film 75a and the total reflection film 76b is positioned opposite to the total reflection film 75c. Also, between the PBS films 75a and 76a, the non-reciprocal polarizing rotator 77 is disposed.

Each of the integrated reciprocal polarizing rotators 73a to 73c is composed of two different reciprocal polarizing rotators which are so abutted that one rotates linear polarized light by 45° counterclockwise and the other rotates it by 45° clockwise. The non-reciprocal polarizing rotators 74a, 74b and 74c are provided with magnetic field applying means 78a, 78b and 78c, respectively, by which a magnetic field is applied to rotate polarized light by 45°.

Next, the behavior of light in the three-terminal perfect circulation type optical circulator will be explained in FIGS.10A to 10C.

Referring to FIG.10A, light to be input to the beam input/output port 71a is separated into two polarized lights with polarization planes perpendicular to each other by the polarization separating/coupling element 72a, input to the integrated reciprocal polarizing rotator 73a. In the integrated reciprocal polarizing rotator 73a, the polarization plane of a component to be transmitted through the polarization separating/coupling element 72a as extraordinary rays is rotated by 45° clockwise, and the polarization plane of a component to be transmitted through it as ordinary rays is rotated by 45° counterclockwise. Then, both the two polarized lights transmitted through the integrated reciprocal polarizing rotator 73a are rotated by 45° counterclockwise. As a result, the polarization plane of the component to be transmitted through the polarization separating/coupling element 72a as extraordinary rays is not changed, and only the polarization plane of the component to be transmitted through it as ordinary rays is rotated by 90° . Therefore, the two polarized lights have the same polarization plane. Then, the two polarized lights are input as extraordinary rays to the integrated PBS prism 75, reflected by the PBS films 75a, 75b, transmitted through the integrated PBS prism 76, input to the non-reciprocal polarizing rotator 74b. In the non-reciprocal polarizing rotator 74b, both the polarization planes of the two polarized lights are rotated by 45° clockwise. Then, in the integrated reciprocal polarizing rotator 73b, the polarization plane of the component to be transmitted through the polarization separating/coupling element 72a as extraordinary rays is rotated by 45° clockwise, then output as ordinary rays to the polarization separating/coupling element 72b. The polarization plane of the other component is rotated by 45° counterclockwise, then output as extraordinary rays to the polarization separating/coupling element 72b. Then, the polarization separating/coupling element 72b couples the ordinary rays and extraordinary rays, outputting it to the beam input/output port 71b.

Referring to FIG.10B, light to be input to the beam input/output port 71b is separated into ordinary rays and extraordinary rays by the polarization separating/coupling element 72b. Then, the ordinary rays and extraordinary rays are input to the integrated reciprocal polarizing rotator 73b, where the polarization plane of the extraordinary ray component is rotated by 45° clockwise and the polarization plane of the ordinary ray component is rotated by 45° counterclockwise. Then, the two polarized lights are input to the non-reciprocal polarizing rotator 74b, where both the polarization planes of the polarized lights are rotated by 45° clockwise. Thus, the component to be transmitted though the polarization separating/coupling element 72b as ordinary rays is as it is, and the component to be transmitted though it as extraordinary rays is turned into ordinary rays, transmitted through the integrated PBS prism 76. Then, the lights transmitted through the integrated PBS prism 76 are input to the integrated PBS prism 75, where they are transmitted through the PBS film 75b of the integrated PBS prism 75 as they are because both the two components are of ordinary rays. The polarization planes of the two components transmitted through the integrated PBS prism 75 are rotated by 45° counterclockwise by the non-reciprocal polarizing rotator 74c. Further, the lights output from the non-reciprocal polarizing rotator 74c are input to the integrated reciprocal polarizing rotator 73c. In the integrated reciprocal polarizing rotator 73c, the component to be transmitted though the polarization separating/coupling element 72b as ordinary rays is rotated by 45° counterclockwise to give ordinary rays, and the component to be transmitted though it as extraordinary rays is rotated by 45° clockwise to give ordinary rays. Then, the extraordinary rays and ordinary rays are input to the polarization separating/coupling element 72c. The two polarized lights are coupled by the polarization separating/coupling element 73c, then output from the beam input/output port 71c.

Referring to FIG.10C, light to be input to the beam input/output port 71c is separated into ordinary rays and extraordinary rays by the polarization separating/coupling element 72c. Then, the polarization plane of the ordinary ray component is rotated by 45° counterclockwise by the integrated reciprocal polarizing rotator 73c and further rotated by 45° counterclockwise by the non-reciprocal polarizing rotator 74c to give extraordinary rays. On the other hand, the polarization plane of the extraordinary ray component is rotated by 45° clockwise by the integrated reciprocal polarizing rotator 73a and further rotated by 45° counterclockwise by the non-reciprocal polarizing rotator 74c, thereby remaining as extraordinary rays. Therefore, the light input to the beam input/output port 71c is all input as extraordinary rays to the integrated PBS prism 75, reflected by the PBS film 75a and the total reflection film 75c, then input to the integrated PBS prism 76. The two extraordinary lights input to the integrated PBS prism 76 are reflected by the total reflection film 76b, reflected by the PBS film 76a, input to the reciprocal polarizing rotator 77. The reciprocal polarizing rotator 77 rotates both the polarization planes by 90°, then outputting the lights to the integrated PBS prism 75. The lights input to the integrated PBS prism 75 are transmitted through the PBS film 75a, input to the non-reciprocal polarizing rotator 74a. Both the polarization planes are rotated by 45° clockwise by the non-reciprocal polarizing rotator 74a. Then, by the integrated reciprocal polarizing rotator 73a, the component to be transmitted though the polarization separating/coupling element 72c as ordinary rays is rotated by 45° clockwise to give ordinary rays, and the component to be transmitted though it as extraordinary rays is rotated by 45° counterclockwise. Then, the two lights are input to the polarization separating/coupling element 72a. The two polarized lights are coupled by the polarization separating/coupling element 73a, then output from the beam input/output port 71a.

As explained above, in the eighth embodiment, the perfect circulation type optical circulator can be composed by using the smaller number of components while giving a nigh isolation. Meanwhile, the modifications in the second to seventh embodiments which are made to the first embodiment can be also applied to the optical circulator in the eighth embodiment.

Next, a specific example of the three-terminal perfect circulation type optical circulator in the eighth embodiment will be explained.

By the inventors, a three-terminal perfect circulation type optical circulator is fabricated and used in optical communication, where optical fibers are used for the beam input/output port 71a, 71b and 71c, rutile monocrystal is used for the polarization separating/coupling elements 72a, 72b and 72c, integrated wave plates where quartz wave plates are combined are used for the integrated reciprocal polarizing rotators 73a, 73b and 73c, Faraday rotators are used for the non-reciprocal polarizing rotators 74a, 74b and 74c, a quartz wave plate is used for the reciprocal polarizing rotator 77. As a result, the three-terminal perfect circulation type of polarization-non-dependent optical circulator can be completely realized, and it proves that a high isolation can be obtained by using the small number of total reflection films.

In the eighth embodiment, the polarization separating/coupling elements 72a, 72b and 72c may be composed of calcite other than rutile monocrystal. Also, the PBS film of the integrated PBS prism 76 may be replaced by total reflection film.

Also, the reciprocal polarizing rotator 77 may be replaced by a non-reciprocal polarizing rotator by which the polarization plane of incident light is rotated by 90° or a combination of a reciprocal polarizing rotator and a non-reciprocal polarizing rotator by which the polarization plane of incident light to the beam input/output port 71c is rotated by 90°. By using the combination of a reciprocal polarizing rotator and a non-reciprocal polarizing rotator, leakage light component occurred by that light input to the beam input/output port 71a is leaked to the beam input/output port 71c can be suppressed.

Though the above embodiments employ three- or four-terminal type, a high isolation can be also obtained in an optical circulator with five or more terminals by using a like composition.

Although the invention has been described with respect to specific embodiment for complete and clear disclosure, the appended claims are not to be thus limited but are to be construed as embodying all modifications and alternative constructions that may be occurred to one skilled in the art which fairly fall within the basic teaching here is set forth.

## Claims

1. A polarization-non-dependent type optical circulator, comprising:
a plurality of polarization separating/coupling means where incident light from outside is separated into two polarized lights with polarization planes orthogonal to each other when said incident light is received by a first end portion and two internally transmitted polarized lights with polarization planes orthogonal to each other are coupled when said two internally transmitted polarized lights are received by a second end portion on the opposite side of said first end portion;
a plurality of polarization rotating means, each of which having a first end portion disposed opposite to said second end portion of said polarization separating/coupling means and a second end portion on the opposite side of said first end portion, where two polarized lights with polarization planes orthogonal to each other are rotated to have polarization planes parallel to each other when said two polarized lights are received by said first portion and two internally transmitted polarized lights with polarization planes parallel to each other are rotated to have polarization planes orthogonal to each other when said two internally transmitted polarized lights are received by said second end portion; and
an optical path determining means which is disposed on an optical path connected to said second end portion of said plurality of polarization rotating means and outputs two polarized lights with polarization planes parallel to each other to be input to said second end portion of one of said plurality of polarization rotating means to said second end portion of another of said plurality of polarization
rotating means or to outside according to the direction of said polarization planes and an optical path through which said two polarized lights are input.

2. An polarization-non-dependent type optical circulator, according to claim 1, wherein:
said polarization separating/coupling means is composed of a birefringence crystalline material which gives a same polarization separation distance to both ordinary rays and extraordinary rays.

3. An polarization-non-dependent type optical circulator, according to claim 1, wherein:
said polarization separating/coupling means is composed of a birefringence crystalline material which gives a same optical transmission length to both ordinary rays and extraordinary rays.

4. An polarization-non-dependent type optical circulator, according to claim 2 or 3, wherein:
said birefringence crystalline material is composed of rutile crystal plate.

5. An polarization-non-dependent type optical circulator, according to claim 1, 2, 3 or 4, wherein:
said optical path determining means is composed of at least one integrated polarizing prism.

6. An polarization-non-dependent type optical circulator, according to claim 5, wherein:
said optical path determining means functions as a polarization beam splitter.

7. An polarization-non-dependent type optical circulator, according to claim 5 or 6, wherein:
said integrated polarizing prism is composed of at least one total reflection part.

8. An polarization-non-dependent type optical circulator, according to any one of claims 1 to 7, wherein:
said polarization rotating means is composed of a reciprocal polarizing rotator and a non-reciprocal polarizing rotator which are disposed on a transmission path of light to be input and output.

9. An polarization-non-dependent type optical circulator, according to claim 8, wherein:
said reciprocal polarizing rotator has at least one structure composed of a plurality of half-wave plates which give different rotation directions to polarization planes of transmitted light, said plurality of half-wave plates being disposed in a plane perpendicular to said transmitted light.

10. An polarization-non-dependent type optical circulator, according to claim 8 or 9, wherein:
said non-reciprocal polarizing rotator is composed of a Faraday rotator and a magnetic field applying means which applies magnetic field to said Faraday rotator.

11. An polarization-non-dependent type optical circulator, according to claim 8, 9 or 10, wherein:
said reciprocal polarizing rotator is composed of a plurality of 45° rotatory polarizing plates which give different rotation directions to polarization planes of transmitted light, said plurality of 45° rotatory polarizing plates being disposed in a plane perpendicular to said transmitted light.

12. An polarization-non-dependent type optical circulator, according to claim 10 or 11, wherein:
said Faraday rotator is composed of a magnetic garnet monocrystalline material.

13. An polarization-non-dependent type optical circulator, according to any one of claims 1 to 12, further comprising:
a polarizing element through which only light with a predetermined polarization plane is transmitted, said polarizing element being disposed between said polarization rotating means and said optical path determining means.

14. An polarization-non-dependent type optical circulator, according to claim 13, wherein:
said polarizing element is composed of polarization glass.

15. A circulation-type optical circulator, comprising:
a plurality of polarization separating/coupling means where incident light from outside is separated into two polarized lights with polarization planes orthogonal to each other when said incident light is received by a first end portion and two internally transmitted polarized lights with polarization planes orthogonal to each other are coupled when said two internally transmitted polarized lights are received by a second end portion on the opposite side of said first end portion;
a plurality of polarization rotating means, each of which having a first end portion disposed opposite to said second end portion of said polarization separating/coupling means and a second end portion on the opposite side of said first end portion, where two polarized lights with polarization planes orthogonal to each other are rotated to have polarization planes parallel to each other when said two polarized lights are received by said first portion and two internally transmitted polarized lights with polarization planes parallel to each other are rotated to have polarization planes orthogonal to each other when said two internally transmitted polarized lights are received by said second end portion; and
an optical path determining means which is disposed on an optical path connected to said second end portion of said plurality of polarization rotating means and outputs two polarized lights with polarization planes parallel to each other to be input to said second end portion of one of said plurality of polarization rotating means to said second end portion of another of said plurality of polarization rotating means or to outside according to the direction of said polarization planes and an optical path through which said two polarized lights are input, said optical path determining means providing a structure of a perfect circulation type optical circulator.

16. A circulation-type optical circulator, according to claim 15, wherein:
said optical path determining means is composed of first and second integrated polarization beam splitters and a reciprocal polarizing rotator which is disposed between said first and second integrated beam splitters.

17. A circulation-type optical circulator, according to claim 15 or 16, wherein:
said first integrated polarization beam splitter is composed of first and second polarization beam splitter films and first total reflection film;
said second integrated polarization beam splitter is composed of third polarization beam splitter film and second total reflection film;
said reciprocal polarizing rotator is disposed on a first optical path connecting between said third polarization beam splitter film of said second integrated polarization beam splitter and said first polarization beam splitter film of said first integrated polarization beam splitter; and
said first and second total reflection films of said first and second integrated polarization beam splitters forms a second optical path parallel to said first optical path.
